# NEUE EUROPÄISCHE PATENTSCHRIFT

(11) **EP 1 035 781 B2**
(45) Veröffentlichungstag und Bekanntmachung des Hinweises auf die Entscheidung über den Einspruch: **19.10.2005**
(45) Hinweis auf die Patenterteilung: 13.03.2002
(21) Anmeldenummer: 98965632.7
(22) Anmeldetag: 16.10.1998
(51) Int. Cl.: A24C 1/00, G05B 19/042

(54) **MASCHINE, INSBESONDERE NETZWERK MIT MASCHINE, SOWIE VERFAHREN ZUR WARTUNG UND/ODER DIAGNOSE VON MASCHINEN**
MACHINE, ESPECIALLY A NETWORK WITH A MACHINE, AND A METHOD FOR MAINTAINING AND/OR DIAGNOSING MACHINES
MACHINE, EN PARTICULIER RESEAU AVEC MACHINE, AINSI QUE PROCEDE POUR LA MAINTENANCE OU LE DIAGNOSTIC DE MACHINES

(30) Priorität: 04.12.1997 DE 19753704
(43) Veröffentlichungstag der Anmeldung: 20.09.2000
(60) Teilanmeldung: 01108569.3
(73) Patentinhaber: Focke & Co. (GmbH & Co. KG), 27283 Verden (DE)
(72) Erfinder: FOCKE, Heinz, D-27283 Verden (DE); BRETTHAUER, Hans-Jürgen, D-28201 Bremen (DE); KALUSCHKE, Jörg, D-28832 Achim (DE)
(74) Vertreter: Bolte, Erich
(86) Internationale Anmeldenummer: PCT/EP1998/006561
(87) Internationale Veröffentlichungsnummer: WO 1999/029191

(56) Entgegenhaltungen:
- EP-A- 0 391 316
- EP-A- 0 525 621
- EP-A- 0 715 235
- WO-A-96/27825
- DE-A- 4 325 325
- US-A- 4 735 032
- US-A- 4 852 335
- US-A- 4 912 554
- US-A- 4 937 675
- US-A- 5 068 735
- US-A- 5 689 442
- US-A- 5 717 456
- PATENT ABSTRACTS OF JAPAN vol. 017, no. 170 (P-1515), 31. März 1993 & JP 04 329411 A (TOKYO GAS CO LTD), 18. November 1992
- PATENT ABSTRACTS OF JAPAN vol. 017, no. 698 (E-1481), 20. Dezember 1993 & JP 05 236575 A (TOSHIBA CORP), 10. September 1993
- PATENT ABSTRACTS OF JAPAN vol. 097, no. 003, 31. März 1997 & JP 08 317069 A (SANYO ELECTRIC CO LTD), 29. November 1996

## Beschreibung

Die Erfindung betrifft eine Zigarettenverpackungs- und/oder -herstellungsmaschine mit einer Mehrzahl von zusammenwirkenden Einheiten, Aggregaten und Organen, und mit wenigstens einem optischen Überwachungs- bzw. Beobachtungsorgan, insbesondere einer Kamera, dessen bzw. deren optischer Empfänger, insbesondere deren Objektiv, über eine langgestreckte, formbare optische Leitung mit einem Auswerteorgan verbunden ist, wobei der optische Empfänger an einer nicht einsehbaren bzw. schwer zugänglichen Position der Maschine angebracht ist und die Leitung mindestens einen lichtleitenden Aufnahmestrang aufweist, wobei der Aufnahmestrang bzw. die Leitung derart formbar ist, dass das Ende des Aufnahmestrangs durch entsprechende Verformung der Leitung in die erwünschte Relativstellung bringbar ist.

Verpackungsmaschinen, insbesondere Zigaretten-Verpackungsmaschinen, aber auch Zigaretten-Herstellungsmaschinen, sind durch einen sehr komplexen Aufbau gekennzeichnet. Die zusammenwirkenden Einheiten, Aggregate und Organe, insbesondere Faltrevolver, Zigaretten-Magazin, Förderer für Zigaretten und Packungen etc., sind so ausgebildet und relativ zueinander angeordnet, dass die visuelle Erkennung und Überwachung der Bewegungsabläufe sowie der Zustände einzelner Organe durch Maschinenpersonal außerordentlich erschwert ist. Dies führt dazu, dass sich allmählich aufbauende Fehlentwicklungen, insbesondere Verschmutzungen von Organen oder Teilen derselben, nicht immer rechtzeitig erkannt und abgestellt werden können. Femer ist die Wartung, Fehlererkennung und Fehlerbehebung derartiger Maschinen aufgrund ihrer Komplexität aufwendig.

Der Erfindung liegt die Aufgabe zugrunde, Verpackungsmaschinen für Zigaretten oder dergleichen so auszubilden, dass die Arbeits- und Bewegungsabläufe sowie etwaige Fehlentwicklungen oder konkrete Fehler leichter und besser erkannt werden können.

Zur Lösung dieser Aufgabe ist die erfindungsgemäße Maschine nach Anspruch 1 dadurch gekennzeichnet, dass
a) der Aufnahmestrang bzw. die Leitung derart formbar ist, dass das Ende des Aufnahmestrangs in die erwünschte Relativstellung zu dem zu überwachenden bzw. zu beobachtenden Organ der Maschine bringbar ist,
b) das freie Ende des Aufnahmestrangs dem zu überwachenden bzw. zu beobachtenden Organ der Maschine zugekehrt ist,
c) die Maschine Sensoren zur Störungserkennung aufweist,
d) eine Steuerung des optischen Überwachungs- bzw. Beobachtungsorgans vorgesehen ist zum Einschalten dieses Organs, wenn ein Sensor eine Störung meldet und zum Aufnehmen eines oder mehrerer Bilder des Erfassungsbereichs dieses Organs,
e) eine Verstelleinrichtung vorgesehen ist zum Verstellen des optischen Übervvachungs- bzw. Beobachtungsorgans in Abhängigkeit einer mittels eines Sensors erkannten Störung, derart, dass der Bereich der Störung von dem Überwachungs- bzw. Beobachtungsorgan erfassbar ist und/oder von Steuerungsbefehlen eines externen Rechners, insbesondere eines Service-Rechners.

Durch die Erfindung ist es möglich, Fehler im Bereich der überwachten Maschine, aber auch zu möglichen Fehlern führende Entwicklungen kurzfristig zu erkennen und entsprechende Gegenmaßnahmen zu treffen. Dieses Ziel wird erfindungsgemäß so umgesetzt, dass optische bzw. visuelle Überwachungsorgane kritische Bereiche der Verpackungsmaschine überwachen, die von dem Bedienungspersonal nicht bzw. nicht ohne größeren Aufwand einsehbar sind. Des Weiteren können auch sich anbahnende fehlerhafte Entwicklungen, insbesondere eine zunehmende Verschmutzung von funktionswichtigen Organen festgestellt und sichtbar gemacht werden.

Eine Verstellung des optischen Überwachungs- bzw. Beobachtungsorgans kann manuell, insbesondere von einem externen Leitstand oder Diagnoserechner bzw. Service-Rechner aus erfolgen, aber auch besonders bevorzugt automatisch erfolgen, nach Maßgabe einer von einem an der Maschine angebrachten Sensor abgegebenen Störungsmeldung der Maschine.

Das erfindungsgemäße optische Überwachungsorgan kann auch dazu eingesetzt werden, Standbilder von bewegten Organen zu erzeugen und auf einem Bildschirm darzustellen, um Bewegungsabläufe, insbesondere Faltschritte an Packungen, sichtbar zu machen. Die Standbilder können mit Hilfe einer dem Überwachungsorgan zugeordneten Beleuchtung unter Anwendung des Stroboskopeffekts erzeugt werden.

Die Kamera zur Beobachtung von verborgenen bzw. bedeckten Bereichen der Maschine ist erfindungsgemäß mit einem formbaren Lichtleitkabel ausgerüstet, also insbesondere einer Leitung mit Glasfasern. Die Leitung kann so ausgebildet sein, dass ein Lichtleit- bzw. Glasfaserstrang mit einer Aufnahme, also einem Objektiv, an dem freien Ende und gegebenenfalls mehrere Lichtleitstränge zur Übertragung von Licht, also zur Beleuchtung des zu beobachtenden Bereichs, zu einer Leitung zusammengefasst sind. Diese kann unterschiedliche Längen aufweisen, je nach Einsatz, zum Beispiel bis zu 1 Meter Länge.

Weitere Einzelheiten der Erfindung werden nachfolgend anhand der in den Zeichnungen dargestellten Ausführungsbeispiele näher erläutert. Es zeigt:
- Fig. 1: eine Verpackungsmaschine bzw. Teile derselben als bevorzugtes Anwendungsbeispiel in schematischer Seitenansicht,
- Fig. 2: eine Einzelheit der Verpackungsmaschine gemäß Fig. 1 als Ausschnitt in stark vergrößertem Maßstab,
- Fig. 3: ein optisches Überwachungsorgan für eine Verpackungsmaschine gemäß Fig. 1 und Fig. 2,
- Fig. 4: einen Querschnitt durch eine Leitung des Überwachungsorgans gemäß Fig. 3, in vergrößertem Maßstab,
- Fig. 5: einen Bildschirm mit der vergrößerten Darstellung eines von dem Überwachungsorgan gemäß Fig. 3 aufgenommenen Details,
- Fig. 6: ein Netzwerk bestehend aus einem lokalen Netzwerk mit mehreren Verpackungs- bzw. Herstellungsmaschinen sowie einem WAN zum Verwenden des lokalen Netzwerkes mit einem Service-Rechner.

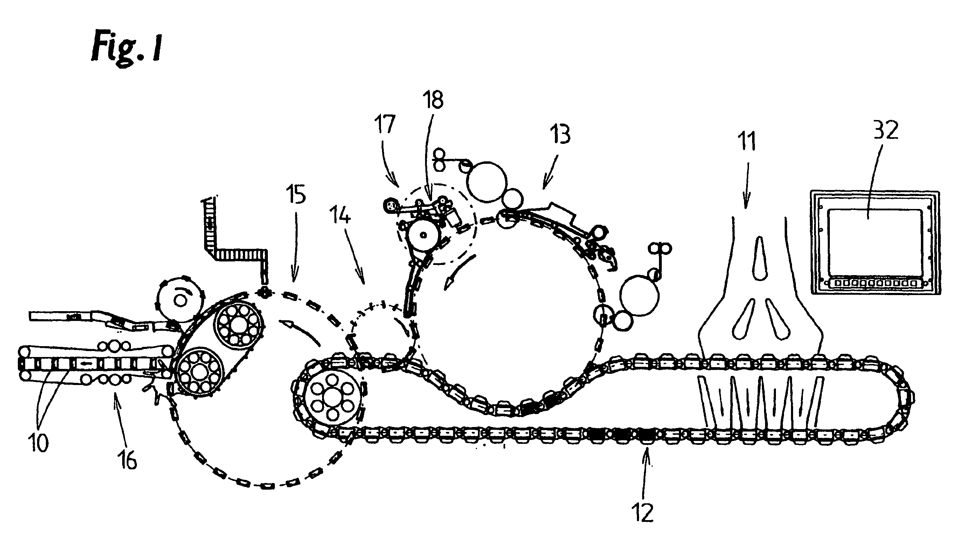

Das in den Zeichnungen dargestellte - bevorzugte - Ausführungsbeispiel befaßt sich mit einer Verpackungsmaschine, konkret mit einer Zigaretten-Verpackungsmaschine für die Fertigung von Zigarettenpackungen 10 des Typs Weichbecher. In Fig. 1 ist in vereinfachter Seitenansicht der Aufbau der Verpackungsmaschine gezeigt. Diese besteht danach aus einem Zigaretten-Magazin 11, einer Taschen kette 12 zum Transport von Zigarettengruppen und einem Faltrevolver 13. Dieser ist über einen Übergaberevolver 14 mit einem Trockenrevolver 15 verbunden. In dessen Bereich verweilen die fertiggestellten Zigarettenpackungen 10 für eine gewisse Dauer, damit Leimstellen aushärten können. Die fertigen Zigarettenpackungen 10 werden über einen Abförderer 16 abtransportiert. Einzelheiten der Verpackungsmaschine ergeben sich aus US 4 735 032 sowie aus US 4 852 335.

Die Verpackungsmaschine weist eine Vielzahl von Bereichen auf, die während des Betriebes einer Materialabnutzung, unerwünschten Fehlstellungen von Organen oder Verschmutzungen ausgesetzt sein können. Die unmittelbare visuelle Überwachung und Kontrolle vieler Bereiche ist durch das Bedienungspersonal der Verpackungsmaschine nicht oder nur mit großem Aufwand möglich.

Als Beispiel für einen derartigen kritischen und überwachungsbedürftigen Bereich der Verpackungsmaschine ist ein dem Faltrevolver 13 zugeordnetes Aggregat ausgewählt, nämlich ein im Bereich einer Leimstation 17 wirkendes Leimaggregat 18. Dieses ist ortsfest unmittelbar neben der kreisförmigen Bewegungsbahn des Faltrevolvers 13 bzw. der Zigarettenpackungen 10 positioniert. Aufgabe des Leimaggregats 18 ist es, Leim auf bestimmte Faltlappen der Zigarettenpakkung 10 aufzubringen, und zwar insbesondere punktförmige Leimbilder. Wegen der Einzelheiten über Aufbau und Funktion des Leimaggregats 18 wird auf DE 196 48 445.6 verwiesen.

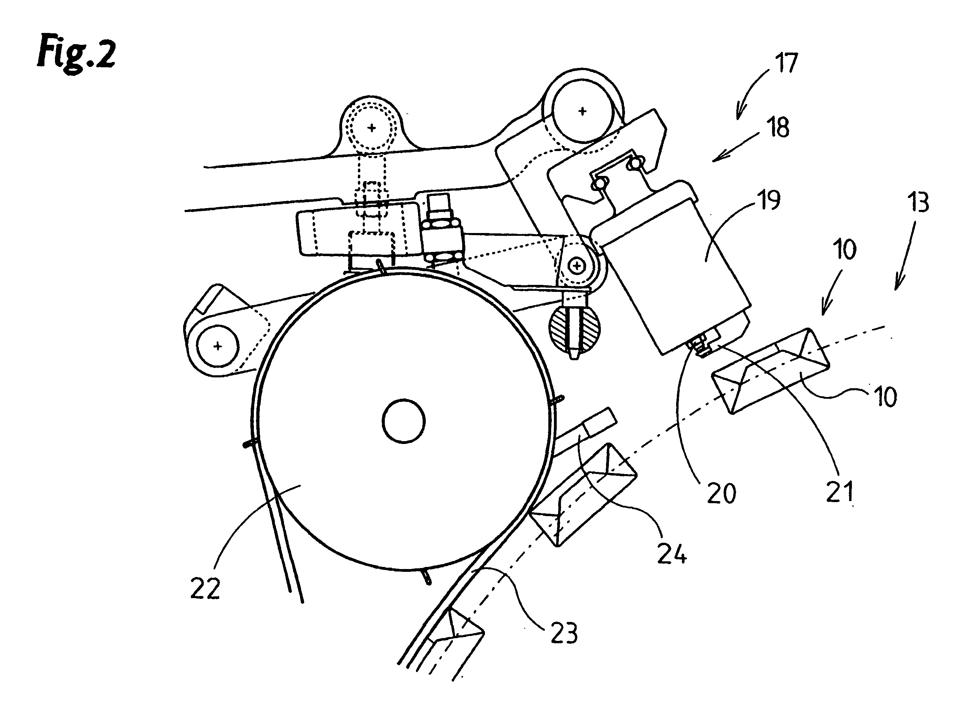

Das Leimaggregat 18 weist eine oder mehrere Leimdüsen 19 auf. Die Leimdüse 19 ist im vorliegenden Falle so ausgebildet, daß an der dem Faltrevolver 13 bzw. den Zigarettenpackungen 10 zugekehrten Seite ein Düsenkopf 20 oder mehrere in Axialrichtung des Faltrevolvers nebeneinanderliegende Düsenköpfe 20 angeordnet sind. Aus diesen tritt der Leim portionsweise aus. In Fig. 2 ist eine zurückgezogene Position der Leimdüse 19 gezeigt, in der der Düsenkopf 20 durch ein Verschlußorgan 21 verschlossen ist.

Der Bereich des Leimaggregats 18 bzw. der Düsenköpfe 20 ist aufgrund der Gestaltung der Verpakkungsmaschine nicht unmittelbar einsehbar. So ist ein Bereich beispielsweise verdeckt durch eine drehend angetriebene Umlenkwalze 22 für Stützgurte 23, die in einem Umfangsbereichs des Faltrevolvers 13 außen an den Zigarettenpackungen 10 anliegen. Die Umlenkwalze 22 bzw. die Stützgurte 23 behindern den Einblick zur Leimdüse 19.

Um gleichwohl eine visuelle Überwachung dieses sensiblen Organs zu ermöglichen, ist in diesem Bereich ein Fernüberwachungsorgan installiert. Dieses besteht aus einer geeigneten Kamera (nicht gezeigt) und einer dem zu überwachenden bzw. einzusehenden Bereich zugeordneten Optik. Diese ist demnach von der eigentlichen Kamera entfernt. Die von der Optik aufgenommenen Bilder werden über eine Leitung zur Kamera geführt und damit in Bilder umgesetzt.

Bei dem vorliegenden Ausführungsbeispiel führt eine Leitung 24 zu dem zu überwachenden Bereich, im vorliegenden Falle also in die Nähe des Leimaggregats 18 bzw. der Leimdüsen 19. Die Leitung 24 bildet am freien Ende ein Objektiv, im einfachsten Falle das freie Ende von Lichtleitkabeln. Bei dem vorliegenden Ausführungsbeispiel hat die Leitung 24 eine Mehrfachfunktion. In einer äußeren Umhüllung 25 sind mehrere, im vorliegenden Falle drei Lichtleitkabel mit unterschiedlichen Funktionen vorgesehen. Ein (im Durchmesser größerer) Aufnahmestrang 26 erfaßt mit einem am freien Ende gebildeten Objektiv bzw. mit der Endfläche von Lichtleitfasern, insbesondere Glasfasersträngen, das aufzunehmende Bild. Des weiteren sind in der gemeinsamen Umhüllung 25 zwei Lichtleitkabel 27, 28 untergebracht. Diese bestehen ebenfalls vorzugsweise aus Glasfasersträngen. Die Lichtleitkabel 27, 28 sind an eine Lichtquelle angeschlossen und dienen zum Ausleuchten des zu überwachenden Bereichs, also im vorliegenden Falle des Bereichs der Düsenköpfe 20.

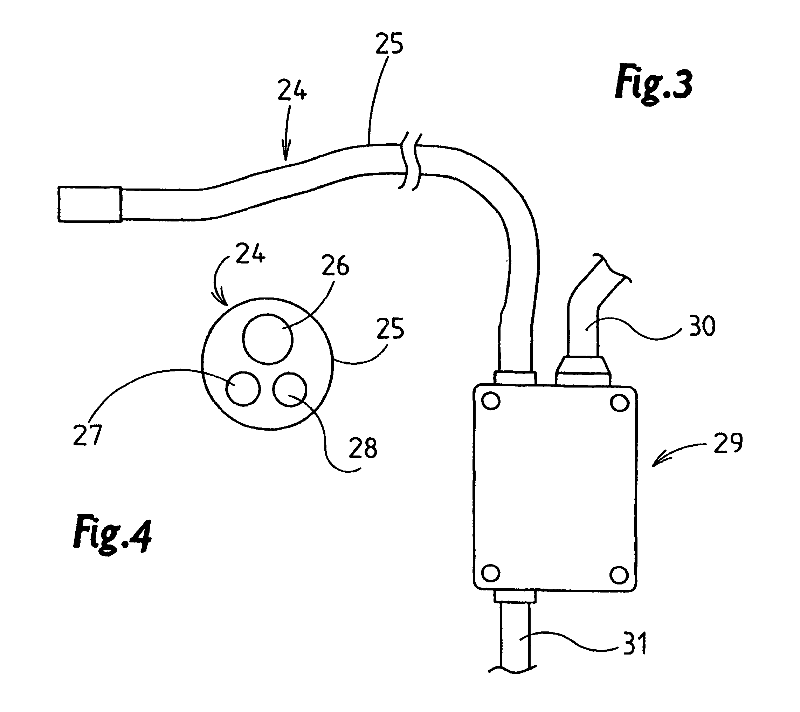

Die Leitung 24 ist an eine Einheit 29 angeschlossen, von der in Fig. 3 lediglich das Gehäuse gezeigt ist. Die Einheit 29 dient im vorliegenden Falle zur Überleitung der aufgenommenen Bilder über eine Anschlußleitung 30 an die (nicht gezeigte) Kamera oder an eine andere Bild- bzw. Signal-Auswerteeinheit. Die Einheit 29 kann auch dazu dienen, die aufgenommenen Bilder in elektrische Signale umzuwandeln, beispielsweise über einen CCD-Empfänger. Weiterhin ist an die Einheit 29 eine Verbindungsleitung 31 zu einer Lichtquelle (nicht gezeigt) angeschlossen.

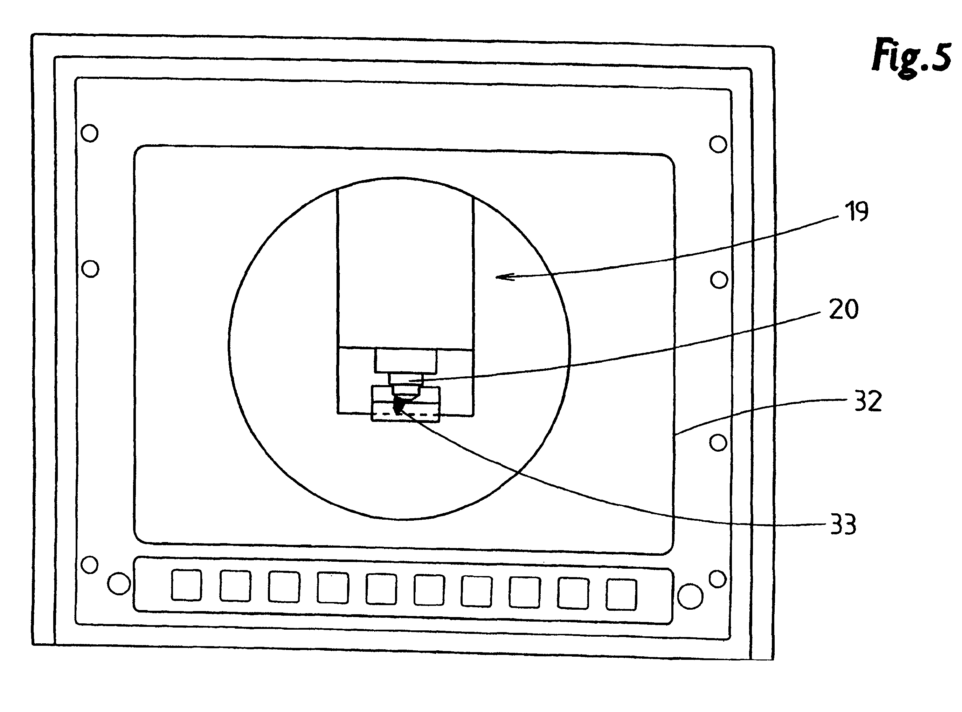

Die von der Kamera aufgenommenen Bilder des beobachteten Bereichs können auf einem Bildschirm 32 eines der Verpackungsmaschine zugeordneten Monitors dargestellt werden, und zwar vorzugsweise als Bildausschnitt in Vergrößerung. Fig. 5 zeigt als Beispiel das Leimaggregat 18 bzw. den vergrößerten Düsenkopf 20 mit einer seitlichen unerwünschten Leimablagerung 33. Diese ist für die Maschinenbedienung ein Hinweis darauf, daß im Bereich des Leimaggregats 18 ein kritischer Zustand im Entstehen ist.

Die beschriebene optische Überwachungs- bzw. Beobachtungseinrichtung ermöglicht die Erzeugung von Standbildern, beispielsweise zur Kontrolle von schnell ablaufenden Bewegungen beim Falten von Zuschnitten. Die Standbilder können durch Anwendung des an sich bekannten Stroboskopeffekts erzeugt werden. Zu diesem Zweck wird über die Lichtquelle und die Lichtleitkabel 27, 28 eine pulsierende Ausleuchtung des zu beobachtenden Bereichs geschaffen, und zwar im Bewegungstakt der Maschine. Wenn diese mit einer Leistung von zum Beispiel 700 Takten pro Minute arbeitet, müssen entsprechend 700 Lichttakte in dem zu beobachtenden Bereich erzeugt werden.

Die Leitung 24 ist zweckmäßigerweise durch entsprechende Ausgestaltung der Umhüllung 25 und der Stränge bzw. Kabel 26, 27 und 28 formbar ausgebildet, so daß die erwünschte Relativstellung durch bloßes Verformen gebildet werden kann.

In vielen verpackungsrelevanten Bereichen sind Sensoren angebracht, die Störungen erkennen. Falls ein derartiger Bereich nicht von einer Bedienperson einsehbar ist, weist die Maschine eine Kamera, beispielsweise in Form der beschriebenen optischen Überwachungs- bzw. Beobachtungseinrichtung auf, welche diesen Bereich überwacht. Wenn dann in diesem Bereich eine Störung auftritt, wird automatisch ein Bild dieses Bereichs von der Kamera bzw. der beschriebenen optischen Überwachungs- bzw. Beobachtungseinrichtung aufgenommen und auf einem Bildschirm angezeigt. Dabei wird - falls das Licht in diesem Bereich der Störung nicht ausreicht - mit den Lichtquellen der Kamera dieser Bereich zusätzlich ausgeleuchtet.

Beispielsweise ermittelt ein Sensor einen Fehler derart, daß in unbefriedigender Weise Leim auf einen Zuschnittaufgebrachtworden ist. Dannwird die Kamera bzw. das optische Überwachungs- bzw. Beobachtungsorgan eingeschaltet, ggf. einschließlich der zugeordneten Lichtquellen, so daß ein Bild bzw. Bilder von diesem Bereich aufgenommen werden können. Diese Bilder gelangen sodann auf den erwähnten Bildschirm.

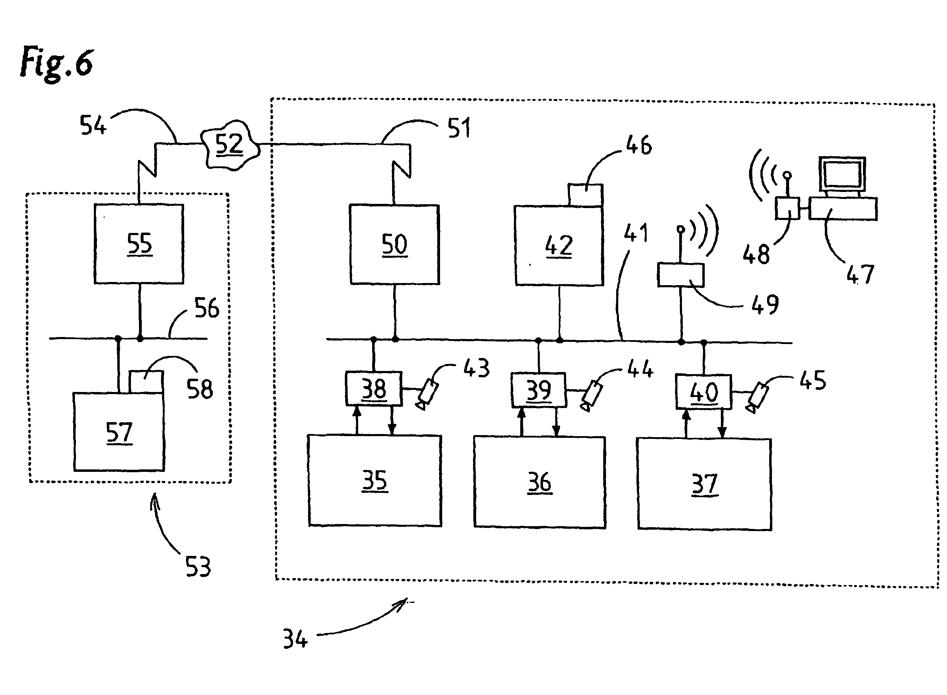

Fig. 6 zeigt ein lokales Netzwerk 34. Dieses Netzwerk 34 ist beispielsweise bei einem Zigarettenhersteller aufgebaut. Es weist mehrere Maschinen 35, 36, 37 auf. Bei diesen Maschinen 35, 36, 37 handelt es sich um Zigarettenverpackungs- und/oder Herstellungsmaschinen.

Jede dieser Maschinen 35, 36, 37 weist eine Steuerungseinrichtung 38, 39, 40 auf zur Steuerung der Maschinen 35, 36, 37. Die Steuerung bildet eine Schnittstelle zu einem Netzwerkkabel 41 des lokalen Netzwerkes 34. Auf diese Weise sind alle Maschinen 35, 36, 37 an ein gemeinsames Netzwerkkabel 41 angeschlossen.

Die Steuerungseinrichtungen 38, 39, 40 der Maschinen 35, 36, 37 bilden - wie gesagt - eine Schnittstelle der Maschine mit dem Netzwerkkabel 41 des lokalen Netzwerks 34. Über diese Schnittstelle werden Daten bidirektional mit den Maschinen 35, 36, 37 ausgetauscht. Auf diese Weise können nicht nur Daten aus der Maschine ausgelesen werden, sondern man kann auch von außen in die Maschine eingreifen.

An das Netzwerkkabel 41 sind des weiteren ein Leitstand- und Diagnoserechner 42 angeschlossen. An diesem Leitstand- und Diagnoserechner 42 kann ein Bediener an einzelnen oder mehreren Maschinen 35, 36, 37 gleichzeitig Wartungs-, Diagnose- und Störungsbeseitigungsmaßnahmen vornehmen. Beispielsweise kann der Bediener Maschinendaten abfragen und somit feststellen, wieviele Einheiten (Packungen oder Zigaretten) innerhalb einer Schicht oder eines sonstigen Zeitabschnitts hergestellt worden sind. Der Bediener kann aber auch Vorgaben für die Maschinen 35, 36, 37 machen, beispielsweise derart, daß eine bestimmte Anzahl von Einheiten innerhalb eines bestimmten Zeitabschnitts produziert werden soll. Mittels des Leitstand- und Diagnoserechners 42 kann man auch aktualisierte Software in die Maschinensteuerungen 38, 39, 40 einspielen. Von diesem Rechner 42 kann der Bediener aber auch Maschinenzustände abfragen. Beispielsweise erhält er auf diese Weise Informationen über Störungen. Er kann dann von dem Leitstand- und Diagnoserechner42 Maßnahmen ergreifen, um derartige Störungen zu beseitigen. Es kann nämlich vorkommen, daß eine Störung auch ohne entsprechende Handgriffe vor Ort gewissermaßen von Ferne aus behoben werden kann.

Sollte eine Störung jedoch nichtvon Ferne aus behoben werden können, bietet ein an jeder Maschine installiertes Videokonferenzsystem 43, 44, 45 und ein entsprechendes Videokonferenzsystem 46 am Leitstand- und Diagnoserechner 42 den Bedienern am Leitstand- und Diagnoserechner 42 und der jeweiligen Maschine 35, 36, 37 die Möglichkeit einer audio-visuellen Kommunikation. Diese Videokonferenzsysteme 43, 44, 45, 46 weisen jeweils ein Mikrofon und eine Kamera auf. Insbesondere erlaubt ein derartiges Videokonferenzsystem auch die Übertragung von Bildern der Maschine 35, 36, 37 auf einen Bildschirm des Leitstand- und Diagnoserechners. Dieser Bediener muß dann nämlich nicht erst zur Maschine gehen, um die betreffende Störung vor Ort, in Augenschein zu nehmen. Vielmehr kann der Bediener vom Leitstand- und Diagnoserechner 42 aus geeignete Maßnahmen treffen, um eine aufgetretene Störung zu beseitigen. Falls dazu Handgriffe nötig sind, weist er den Bediener der Maschine 35, 36, 37 an, diese auszuführen.

Mit den Steuerungseinrichtungen 38, 39, 40 der Maschine 35, 36, 37 sind auch Einheiten 29 verbunden, die Bilder von Bereichen liefern, die von einer Bedienperson nicht unmittelbar einsehbar sind. Auch diese Bilder können über das Netzwerk 34 an den Leitstand- und Diagnoserechner 42 übertragen werden.

Für weitere Diagnosemaßnahmen ist ein weiterer mobiler Rechner 47, beispielsweise ein Laptop vorgesehen. Dieser mobile Rechner 47 weist eine Sende- und Empfangseinrichtung 48 zum Betreiben einer drahtlosen Verbindung mit dem Netzwerk 34 auf. Über eine weitere mit dem Netzwerkkabel 41 des lokalen Netzwerks 34 verbundene drahtlose Sende- und Empfangseinrichtung 49 kann der mobile Rechner 47 mit dem lokalen Netzwerk 34 kommunizieren. Von diesem mobilen Rechner 47 aus können dann die gleichen Funktionen ausgeführt werden wie von dem Leitstand- und Diagnoserechner 42. Dies erhöht die Flexibilität von Wartungs- und Diagnosemaßnahmen. Der für die Wartung und Diagnose zuständige Bediener kann auf diese Weise von jedem beliebigen Arbeitsplatz bzw. Ort seine Arbeit verrichten. Insbesondere kann er in schwierigen Fällen, wenn doch die Maschine 35, 36, 37 vor Ort in Augenschein nehmen muß, den mobilen Rechner 47 mitnehmen und vor Ort einsetzen. Dies hat den Vorteil, daß dieser Bediener seine gewohnte Rechnerumgebung beibehalten kann.

Neben dem mobilen Rechner 47, der über eine Sende- und Empfangseinrichtung 48 mit einer weiteren Sende- und Empfangseinrichtung 49 mit dem Netzwerkkabel für eine drahtlose Verbindung verbunden ist, können auch die Maschinen 35, 36, 37 bzw. ihre Steuerungen 38, 39, 40 über drahtlose Sende- und Empfangseinrichtungen verbunden werden.

Ferner ist mit dem Netzwerkkabel 41 ein sogenannter Server 50 verbunden. Auf diesem Server 50 ist eine Datenbank mit Daten des gesamten Netzwerks 34 einschließlich aller seiner zuvor beschriebenen Komponenten implementiert. Außerdem dient der Server 50 der Kommunikation mit externen Netzen.

Über eine Verbindung 51 ist der Server 50 und damit das gesamte Netzwerk 34 mit einem WAN (Wide Area Network) 52 bzw. Langstreckennetzwerk verbunden. Diese Verbindung besteht beispielsweise aus einer Modem-, ISDN-, Funk- und/oder Satellitenverbindung. Bei dem WAN 52 handelt es sich beispielsweise um das Internet (bzw. WWW, d.h. World Wide Web) oder auch andere größere firmeninterne Netzwerke.

Ebenfalls an das WAN 52 ist ein weiteres lokales Netzwerk 53 angeschlossen, und zwar ebenfalls über eine Verbindung 54, die eine Verbindung gemäß der Verbindung 51 sein kann.

Das lokale Netzwerk 53 weist ebenfalls einen Netzwerk-Server 55 auf, welcher über ein Netzwerkkabel 56 eine Verbindung zu weiteren Netzwerkrechnern herstellt. Der Server 55 entspricht im wesentlichen dem Server 50, so daß insoweit auf den Server 50 Bezug genommen wird. Insbesondere weist der Server 55 ebenfalls eine Datenbank sowie Kommunikationsmittel auf, um eine Kommunikation des lokalen Netzwerkes 53 mit dem WAN 52 zu ermöglichen. Das Netzwerkkabel 56 schafft eine Verbindung zu dem Service-Rechner 57, welcher ebenfalls mit einem Videokonferenzsystem 58 ausgestattet ist.

Der Service-Rechner 57 bietet die gleichen Funktionen wie der Leitstand- und Diagnoserechner 42, so daß insofern auf diesen Leitstand- und Diagnoserechner 42 Bezug genommen wird. Der Service-Rechner 57 bietet jedoch zusätzlich gegenüber dem Leitstand- und Diagnoserechner 42 die Möglichkeit über sehr weite Entfernung, nämlich im wesentlichen soweit das WAN reicht, mit den Maschinen 35, 36, 37 zu kommunizieren und ggf. in diese Maschinen einzugreifen.

### Bezugszeichenliste

- 10: Zigarettenpackung
- 11: Zigaretten-Magazin
- 12: Taschenkette
- 13: Faltrevolver
- 14: Übergaberevolver
- 15: Trockenrevolver
- 16: Abförderer
- 17: Leimstation
- 18: Leimaggregat
- 19: Leimdüse
- 20: Düsenkopf
- 21: Verschlußorgan
- 22: Umlenkwalze
- 23: Stützgurt
- 24: Leitung
- 25: Umhüllung
- 26: Aufnahmestrang
- 27: Lichtleitkabel
- 28: Lichtleitkabel
- 29: Einheit
- 30: Anschlußleitung
- 31: Verbindungsleitung
- 32: Bildschirm
- 33: Leimablagerung
- 34: lokales Netzwerk
- 35: Maschine
- 36: Maschine
- 37: Maschine
- 38: Steuerungseinrichtung
- 39: Steuerungseinrichtung
- 40: Steuerungseinrichtung
- 41: Netzwerkkabel
- 42: Leitstand- und Diagnoserechner
- 43: Video-Konferenzsystem
- 44: Video-Konferenzsystem
- 45: Video-Konferenzsystem
- 46: Video-Konferenzsystem
- 47: mobiler Rechner
- 48: Sende- und Empfangseinrichtung
- 49: Sende- und Empfangseinrichtung
- 50: Server
- 51: Verbindung
- 52: WAN
- 53: lokales Netzwerk
- 54: Verbindung
- 55: Server
- 56: Netzwerkkabel
- 57: Service-Rechner
- 58: Video-Konferenzsystem

## Patentansprüche

1. Zigarettenverpackungs- und/oder -herstellungsmaschine mit einer Mehrzahl von zusammenwirkenden Einheiten, Aggregaten und Organen, und mit wenigstens einem optischen Überwachungs- bzw. Beobachtungsorgan, insbesondere einer Kamera, dessen bzw. deren optischer Empfänger, insbesondere deren Objektiv, über eine langgestreckte, formbare optische Leitung (24) mit einem Auswerteorgan verbunden ist, wobei der optische Empfänger an einer nicht einsehbaren bzw. schwer zugänglichen Position der Maschine angebracht ist und die Leitung (24) mindestens einen lichtleitenden Aufnahmestrang (26) aufweist, wobei der Aufnahmestrang (26) bzw. die Leitung (24) derart formbar ist, dass das Ende des Aufnahmestrangs (26) durch entsprechende Verformung der Leitung (24) in die erwünschte Relativstellung bringbar ist, **dadurch gekennzeichnet, dass**
a) der Aufnahmestrangs (26) bzw. die Leitung (24) derart formbar ist, dass das Ende des Aufnahmestrangs (26) in die erwünschte Relativstellung zu dem zu überwachenden bzw. zu beobachtenden Organ der Maschine bringbar ist,
b) das freie Ende des Aufnahmestrangs (26) dem zu überwachenden bzw. zu beobachtenden Organ der Maschine zugekehrt ist,
c) die Maschine Sensoren zur Störungserkennung aufweist,
d) eine Steuerung des optischen Überwachungs- bzw. Beobachtungsorgans vorgesehen ist zum Einschalten dieses Organs, wenn ein Sensor eine Störung meldet und zum Aufnehmen eines oder mehrerer Bilder des Erfassungsbereichs dieses Organs,
e) eine Verstelleinrichtung vorgesehen ist zum Verstellen des optischen Überwachungs- bzw. Beobachtungsorgans in Abhängigkeit einer mittels eines Sensors erkannten Störung, derart, dass der Bereich der Störung von dem Überwachungs- bzw. Beobachtungsorgan erfassbar ist und/oder von Steuerungsbefehlen eines externen Rechners, insbesondere eines Service-Rechners (57).

2. Maschine nach Anspruch 1, **dadurch gekennzeichnet, dass** ein zu überwachender bzw. zu beobachtender Bereich ausgeleuchtet ist, insbesondere über mit einer Lichtquelle verbundene Lichtleitkabel (27, 28), die mit der Leitung (24) verbunden sind, vorzugsweise durch eine gemeinsame Umhüllung (25) mit dem Aufnahmestrang (26).

3. Maschine nach Anspruch 1 oder 2, **dadurch gekennzeichnet, dass** das aufgenommene Bild über den Aufnahmestrang (26) einem Monitor der Maschine zuführbar und auf einem Bildschirm (32) darstellbar ist, insbesondere als vergrößerter Ausschnitt.

4. Maschine nach einem der Ansprüche 1 bis 3, **dadurch gekennzeichnet, dass** das Überwachungs- bzw. Beobachtungsorgan zur Überwachung eines Leimaggregats (18) mit Leimdüsen (19) und Düsenköpfen (20) zum Aufbringen von Leim auf Faltlappen von Zuschnitten im Bereich des Düsenkopfes (20) angeordnet ist, wobei das Ende der Leitung (24) benachbart zu dem Düsenkopf (20) positioniert ist.

5. Maschine nach Anspruch 1, **gekennzeichnet durch** eine automatische Ein/Ausschalteinrichtung zum Einschalten von Licht im Bereich des optischen Überwachungs- bzw. Beobachtungsorgans, wenn ein Sensor eine Störung meldet, und zum Aufnehmen eines oder mehrerer Bilder dieses Bereichs, bzw. zum Ausschalten des Lichts, wenn die Bilder aufgenommen sind.

## Claims

1. Cigarette packaging and/or producing machine having a number of interacting units, assemblies and elements, and having at least one optical monitoring and observing element, especially a camera, whose optical receiver, especially objective, is connected to an evaluation element via an elongate, deformable optical line (24), the optical receiver being fitted at a position on the machine which cannot be looked at or is difficult to access, and the line (24) having at least one light-conducting recording strand (26), the recording strand (26) or the line (24) being deformable in such a way that the end of the recording strand (26) can be brought into the desired relative position, **characterized in that**
a) the recording strand (26) or the line (24) is deformable in such a way that the end of the recording strand (26) can be brought into the desired position relative to the element of the machine to be monitored or observed,
b) the free end of the recording strand (26) is turned towards the element of the machine to be monitored or observed, by appropriate deformation of the line (24),
c) the machine has sensors for detecting faults,
d) a control system for the optical monitoring and observing element is provided to switch on this element when a sensor reports a fault and to record one or more pictures of the capture area of this element,
e) an adjusting device is provided for adjusting the optical monitoring and observing element on the basis of a fault detected by means of a sensor, in such a way that the area of the fault can be captured by the monitoring and observing element, and/or control commands from an external computer, especially a service computer (57).

2. Machine according to Claim 1, **characterized in that** an area to be monitored or observed is illuminated, especially via fibre-optic cables (27, 28) which are connected to a light source and are joined to the line (24), preferably by a common covering (25) with the recording strand (26).

3. Machine according to Claim 1 or 2, **characterized in that** the picture recorded via the recording strand (26) can be fed to a monitor on the machine and displayed on a screen (32), especially as an enlarged detail.

4. Machine according to one of Claims 1 to 3, **characterized in that** the monitoring and observing element is arranged so as to monitor a gluing assembly (18) having gluing nozzles (19) and nozzle heads (20) for applying glue to folding tabs of blanks in the area of the nozzle head (20), the end of the line (24) being positioned adjacent to the nozzle head (20).

5. Machine according to Claim 1, **characterized by** an automatic on/off switching device to switch on light in the area of the optical monitoring and observing element when a sensor reports a fault, and to record one or more pictures of this area and, respectively, to switch off the light when the pictures have been recorded.

## Revendications

1. Empaqueteuse et/ou confectionneuse de cigarettes comprenant un certain nombre d'entités, de groupes et d'organes coopérants et au moins un organe optique de surveillance ou d'observation, en particulier une caméra, dont le récepteur optique, en particulier l'objectif de celle-ci, est relié par une ligne optique allongée déformable (24) à un organe d'exploitation, le récepteur optique étant monté à un endroit non visible ou difficilement accessible de la machine et la ligne (24) présentant au moins une voie de prise de vue conductrice de lumière (26), la voie de prise de vue (26) ou la ligne (24) étant déformable de façon telle que l'extrémité de la voie de prise de vue (26) puisse être mise dans la position relative désirée par déformation appropriée de la ligne (24), **caractérisée par le fait que**
a) la voie de prise de vue (26) ou la ligne (24) est déformable de façon telle que la voie de prise de vue (26) puisse être mise dans la position relative désirée par rapport à l'organe à surveiller ou observer de la machine,
b) l'extrémité libre de la voie de prise de vue (26) est dirigée vers l'organe à surveiller ou observer de la machine,
c) la machine présente des capteurs de détection des défauts de fonctionnement,
d) il est prévu une commande de l'organe optique de surveillance ou d'observation pour la mise en fonction de cet organe lorsqu'un capteur signale un défaut de fonctionnement et pour la prise d'une ou de plusieurs vues de la zone saisie de cet organe,
e) il est prévu un dispositif de déplacement de l'organe optique de surveillance ou d'observation en fonction d'un défaut de fonctionnement détecté au moyen d'un capteur, de façon telle que la zone du défaut de fonctionnement puisse être saisie par l'organe de surveillance ou d'observation et/ou par des ordres de commande d'un ordinateur externe, en particulier d'un ordinateur de service (57).

2. Machine selon la revendication 1, **caractérisée par le fait qu'**une zone à surveiller ou observer est éclairée, en particulier par l'intermédiaire de câbles conducteurs de lumière (27, 28) reliés à une source lumineuse qui sont reliés à la ligne (24), de préférence par une enveloppe commune (25) contenant la voie de prise de vue (26).

3. Machine selon l'une des revendications 1 et 2, **caractérisée par le fait que** la vue prise peut être conduite par la voie de prise de vue (26) à un moniteur de la machine et présentée sur un écran (32), en particulier sous forme d'extrait agrandi.

4. Machine selon l'une des revendications 1 à 3, **caractérisée par le fait que** l'organe de surveillance ou d'observation est, pour la surveillance d'un groupe d'encollage (18) comportant des buses d'encollage (19) et des têtes de buse (20) pour l'application de colle sur des pattes de découpes, placé dans la zone de la tête de buse (20), l'extrémité de la ligne (24) étant placée à proximité de la tête de buse (20).

5. Machine selon la revendication 1, **caractérisée par** un dispositif automatique d'allumage et d'extinction pour l'allumage de lumière dans la zone de l'organe optique de surveillance ou d'observation lorsqu'un capteur signale un défaut de fonctionnement, et pour la prise d'une ou de plusieurs vues de cette zone et pour l'extinction de la lumière lorsque les vues ont été prises.
